# EUROPEAN PATENT SPECIFICATION

(11) **EP 1 753 966 B1**
(45) Date of publication and mention of the grant of the patent: **19.09.2007**
(21) Application number: 04739444.0
(22) Date of filing: 28.05.2004
(51) Int. Cl.: F16D 13/28, F16D 23/12, F16D 27/00

(54) **CLUTCH**
KUPPLUNG
EMBRAYAGE

(43) Date of publication of application: 21.02.2007
(73) Proprietor: International Innovations Limited, Sydney, NSW 2000 (AU)
(72) Inventor: HARGREAVES, Steve, Broadbeach QLD 4218 (AU); JEGEL, Franz-Peter, A-4407 STEYR-GLEINK (AT); PFEIFER, Bernd, A-8045 GRAZ (AT)
(74) Representative: Babeluk, Michael
(86) International application number: PCT/EP2004/005815
(87) International publication number: WO 2005/119076

(56) References cited:
- DE-A- 10 303 831
- US-A- 6 006 883
- US-A1- 2003 114 264
- US-A1- 2004 050 643
- US-A1- 2004 099 500
- US-B2- 6 578 693

## Description

The invention relates to a clutch, especially for motor vehicles, for the torque connection of at least two drive parts which are rotatable about a rotational axis, comprising at least one clutch device with a first clutch body with at least one first clutch surface and a second clutch body with at least one second clutch surface, with said first and second clutch body being coaxially displaceable relative to each other by means of an actuating means and said first and second clutch surface being mutually connectable in a non-positive way in at least one clutch engagement position, with the actuating means comprising at least one ring gear which comprises a ramp mechanism and is twistable about the rotational axis by an actuator, which mechanism in the clutch engagement position presses the first clutch body against the second clutch body.

From US Pat. No. 6,676,555 B2 a friction clutch is known which can be controlled by an electronic control unit. For the purpose of activating the clutch, a conical clutch body is displaced in the axial direction relative to the second clutch body. The displacement is performed by means of a ring gear which acts via a ramp mechanism on one of the two clutch bodies. The turning of the ring gear occurs via a gearwheel driven by an electromotor. Although relatively high clutch forces can be transmitted via the ramp mechanism, the attachment of an electromotor and a cylinder gear requires a large amount of space because the electromotor (in order to minimize the axial extension) needs to be attached radially outside of the largest clutch diameter and a drive cylinder gear with a relatively large diameter needs to be used. If in order to avoid this disadvantage the electromotor would be positioned within the largest clutch diameter, a mostly unacceptably high need for space in the axial direction would be the consequence. Sufficient space for such configurations is not always readily available. The disadvantage is further that the engaged state can only be maintained as long as the electromotor is provided with power. A similar solution is disclosed in US 2003/114 264 A.

Electromagnetically actuated clutches as are known from US Pat. Nos. 4,416,359 A and 4,258,836 A often come with the disadvantage that only relatively low clutch forces are acting. Moreover, a sensitive control of the closing and opening times cannot be realized or only with difficulty. Electromagnetic clutches are also known from the Japanese specifications JP 61-241533 A and JP 61-241270 A.

Hydraulically actuated actuators are often used when high clutch forces are required. Hydraulically actuated actuators are technically relatively complex and require a high amount of space because hydraulic elements such as hydraulic pumps, pressure regulator valves, control valves, oil filters, oil lines and oil bores need to be provided. This leads to an increase in the number of components, the weight and the need for space. Moreover, a functional security which extends beyond the vehicle service life is threatened by the high degree of complexity. In the case of known gears produced in series, it is necessary to exchange the highly polluting automatic gear oil after 60.000 km for example.

Further US 6,006,883 A, US 2004/099 500 A and SU 6,578,693 B show different embodiments of cone clutches. However these clutches are different to the clutch as described above.

It is the object of the present invention to provide a clutch which allows high clutch forces, comes with a rapid and precise gear shifting behavior and requires little overall space.

According to a first embodiment of the invention, this object is achieved through the features of claim 1. The linear motor can be integrated directly in the clutch housing and thus allows an especially compact configuration.

A second embodiment of the invention is defined in claim 2 and provides that the actuator acts on the ring gear via a worm gear. The worm gear which is actuated via an electromotor acts on a gearing outside on the ring gear. The rotational axis of the worm gear is arranged transversally to the rotational axis of the clutch and approximately tangentially on the ring gear. The worm gear comes with the advantage that as a result of the self-locking effect the clutch can be fixed in any desired position without needing a separate locking mechanism. Moreover, very high gear shifting forces can be realized.

A third embodiment in accordance with the invention and defined in claim 3 provides that the actuator acts on the ring gear tangentially by means of a gearshift rod. It is principally possible to actuate the gearshift rod hydraulically or pneumatically. An electromotively inductive actuation offers the most advantages concerning compactness and low number of components. It may be provided that an electromotor acts via a gear upon the gearshift rod, with the gear converting the rotational movement of the electromotor into a linear movement of the gearshift rod.

The ring gear which can be turned by means of the actuator comprises on one face side at least one shifting ramp of the ramp mechanism which acts axially upon the first clutch body via a torsionally rigid, but axially displaceably arranged engaging ring. Roller bodies, which are preferably balls, can be arranged between the ring gear and the engaging ring, through which the ring gear acts upon the engaging ring. It can be provided alternatively or additionally that the ring gear acts via at least one shifting ramp upon at least one incline of the engaging ring. The shifting ramp of the ring gear and the incline of the engaging ring are preferably provided with an oppositely oriented configuration and can have the same ascending slopes.

In a further embodiment of the invention, the shifting ramp of the ring gear and/or the incline of the engaging ring can each be arranged as at least one convolution, preferably as a trapezoid thread. In order to fix the clutch in an end or intermediate position it can be provided that the ring gear can be fixed by a locking mechanism in at least one clutch position. The locking mechanism can be actuated in an electric, hydraulic or pneumatic way. The locking mechanism is especially advantageous when the actuator acts upon the ring gear via a linear motor or a gearshift rod.

According to the invention it is provided that the clutch is configured as a double clutch with two clutch units, with each clutch unit comprising a clutch device which can be actuated via an actuating means, and with one ring gear with a ramp mechanism being provided for each clutch device. As a result, the gear shifting processes of the individual clutch units can be controlled individually relative to each other. One clutch unit can start to close for example, whereas the other clutch unit is still closed. The opening process of the other clutch unit is only started at a precisely defined point in time. A gear shifting process can be achieved which is seemingly free from the interruption of the tractive force. According to the invention the ramp mechanisms of the clutch devices of both clutch units are configured in a reciprocating manner with respect to each other. It may be provided in particular that the shifting ramps of the rings gears of the clutch units are shaped in a reciprocating manner with respect to each other, i.e. they are precisely contrary. This allows engaging the one clutch unit and disengaging the other clutch unit by turning the ring gears in the same direction.

In order to enable the alternating engagement or disengagement of the two clutch devices of the clutch it is advantageous to provide the ring gears with a fixed connection with each other, preferably with an integral configuration. Both ring gears can be actuated by a single actuator.

In order to enable a very smooth engagement of the clutch devices the ring gears can be configures without a fixed connection, wherein each ring gear can be actuated through a separate actuator.

In order to reduce the required pressing forces the clutch is arranged as a double cone clutch, preferably a multi-conical clutch. The required axial pressing forces can thus be reduced considerably.

For the purpose of transmitting high torques it is especially advantageous if the clutch is configured as a preferably wet-running disk clutch, especially preferably as a wet multiple-disk clutch.

The configuration in accordance with the invention allows an especially fine-dosed actuation of the clutch by slipping transitions between engaged and disengaged position. This can be achieved in conventional clutches which are actuated hydraulically or pneumatically only with an extremely high amount of control technology, if at all.

The invention is now explained below by reference to the drawings, wherein:
- Fig. 1: shows a clutch in accordance with the invention in a sectional oblique view in a first embodiment;
- Fig. 1a: shows said clutch in a side view;
- Fig. 2: shows a clutch in accordance with the invention in a sectional oblique view in a second embodiment;
- Fig. 3: shows a clutch in accordance with the invention in a sectional oblique view in a third embodiment;
- Fig. 4: shows a ring gear of the clutch in an oblique view;
- Fig. 5: shows the ring gear in a side view, and
- Fig. 6: shows a clutch in accordance with the invention in a sectional oblique view in a fourth embodiment.

Parts with the same function are shown in the embodiments with the same reference numerals.

The clutch 2 is used for the rotational connection of at least two drive parts which rotate about a rotational axis 4. The clutch 2 comprises at least one clutch device 6 with a first clutch body 8 and a second clutch body 10, with the first clutch body 8 forming at least one first clutch surface 12 and the second clutch body 10 forming at least one second clutch surface 14. In each embodiment the clutch device 6 is arranged as multi-cone disk clutch, with the mutually facing first and second clutch surfaces 12, 14 having a conical shape. Disk bodies 16, 18 are arranged between the first and the second clutch surfaces 12, 14, with alternatingly a first disk body 16 each being rotationally connected with the first clutch body 8 and a second disk body 18 with the second clutch body 10, but being held in an axially movable way. The multi-cone disk clutch has the advantage that for transmitting relatively high torques only comparatively low clutch forces are required.

The first clutch body 8 is axially displaceable and torsionally rigidly connected with a first drive part (not shown) which is formed by a shaft for example. An internal gearing 20 can be provided for the rotational connection with the first drive part. The second clutch body 10 is rigidly connected with the second drive part 22 which is formed in each of the embodiments by gear wheel with external gearing. Alternatively the second drive part 22 can be formed by a shaft. In this way single or double clutches can be realized, e.g., in order to substitute a main clutch of a of a vehicle transmission.

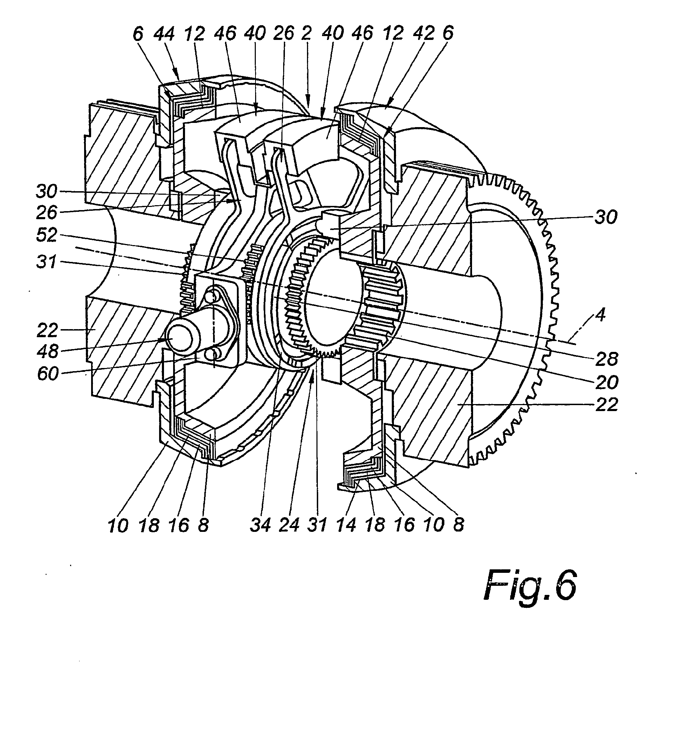

The engagement and disengagement occurs through an actuating means 24. For the purpose of engagement, the first clutch body 8 is pressed against the second clutch body 10. The actuating means 24 comprises a ring gear 26 which is rotatable about the rotational axis 4 and comprises a ramp mechanism 28 which presses a torsionally rigid, but axially displaceably held engaging ring 30 against the first clutch body 8 and thus initiates the clutch engagement process. In the embodiments, the ramp mechanism 28 comprises at least one shifting ramp 34 on the face side 32 of the ring gear 26 facing the engaging ring, which shifting ramp acts upon pressure parts 36 of the engaging ring 30 or via pressure bodies such as roller bodies 38 which are arranged as balls. At least three shifting ramps 34 and pressure parts 36 or pressure bodies are advantageous for the purpose of an even actuation. The pressure parts 36 can also be arranged as inclines 37, as is shown in Fig. 5. The shifting ramps 34 of the ring gear 26 and the inclines 37 of the engaging ring 30 are provided with an oppositely oriented configuration and can have the same ascending slopes.

For the purpose of actuating the clutch device 6, the ring gear 26 is rotated in a precise angular way by means of an actuator 40 acting on the circumference. The engaging ring 30 is prevented from rotating by an external gearing 31 which is fixed to the housing and which cooperates with a respective internal gearing of the engaging ring 30. A fixed console is designated with reference numeral 60.

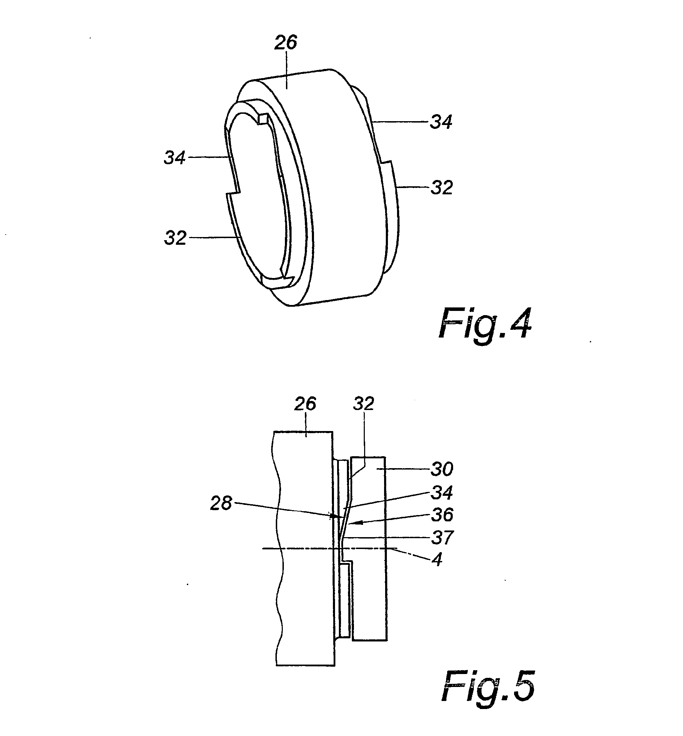

The figures show embodiments in which the clutch 2 is arranged as a double clutch with two clutch units 42, 44 each, with each clutch unit 42, 44 comprising a clutch device 6. Each clutch device 6 comprises a first and a second clutch body 8, 10, with the first clutch body 8 being pressed by an actuating means 24 each against the second clutch body 10. An axial displaceable engaging ring 30 is provided for each clutch device 6, which ring is axially displaced via a ramp mechanism 28 each of ring gear 26. As is shown especially well in fig. 4, the ramp mechanisms 28 or shifting ramps 34 of the ring gears 26 are arranged in a reciprocal way relative to each other, so that in the case of the simultaneous rotation of the ring gears 26 of the two clutch devices 6 the one clutch device 6 of the one clutch unit 42 will be engaged and the clutch device 6 of the other clutch unit 44 will be disengaged. The ring gears 26 of the two clutch devices 6 are advantageously rigidly connected with each other and can also be provided with an integral configuration. This allows actuating both clutch devices 6 with a single actuator 40 acting upon the ring gear 26. Since the shifting ramps 34 of the two ring gears 26 are aligned opposite of each other, the clutch device 6 of the one clutch unit 42 is deactivated when the clutch device 6 of the other clutch device 44 is activated, and vice-versa. It is especially advantageous when the engaging rings 30 of the two clutch units 42, 44 are arranged with respect to the ring gear 26 and the shifting ramps 34 are dimensioned in such a way that a neutral position is reached in a middle turning position of the ring gear 26 in which body clutch units 42, 44 are deactivated.

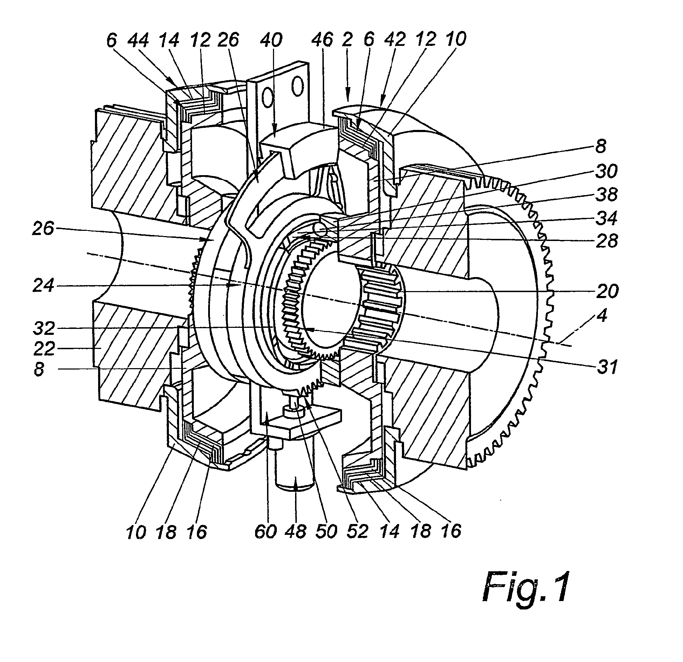

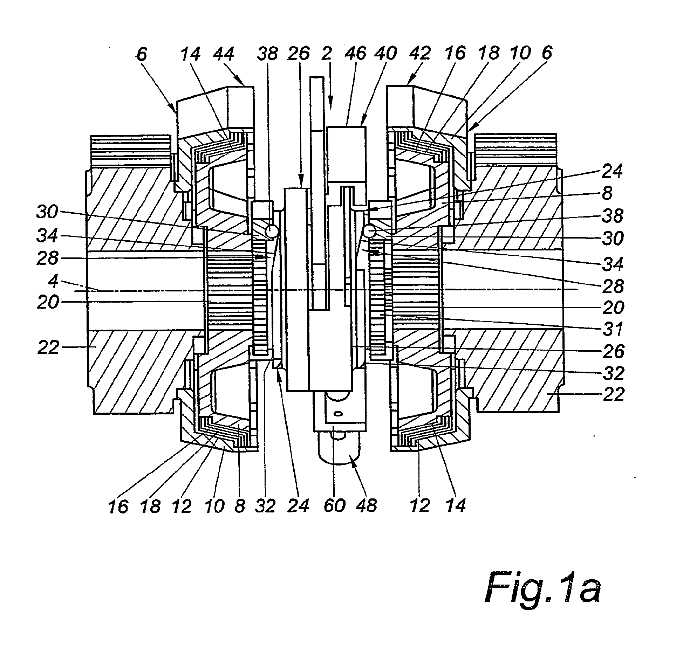

In the embodiment shown in the Figs. 1 and 1a, the actuator 40 acts on the ring gear 26 through a linear motor 46 that can be actuated electrically. In order to enable the linear motor 46 to be cut off from the current supply at the respective end position, the ring gear 26 can be fixed by a locking mechanism 48 in at least one clutch position. A locking pin 50 of the locking mechanism 48 latches into a respectively shaped latching part 52 of the ring gear 26. The locking mechanism 48 can be driven in an inductive, hydraulic or pneumatic way.

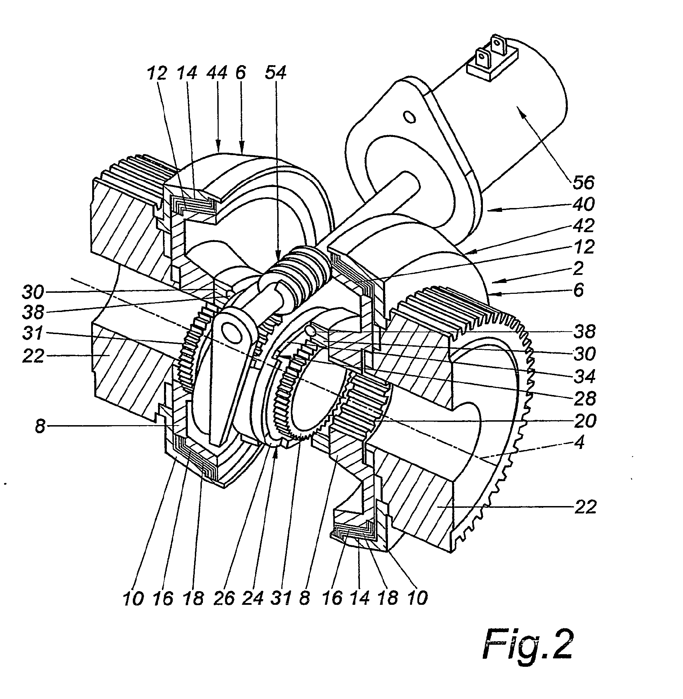

Fig. 2 shows an embodiment in which the actuator 40 acts via a worm gear 54 on the ring gear 26, with the worm gear 54 being driven by an electromotor 56. As a result of the self-locking action of the worm gear 54, a locking mechanism can be omitted in this configuration.

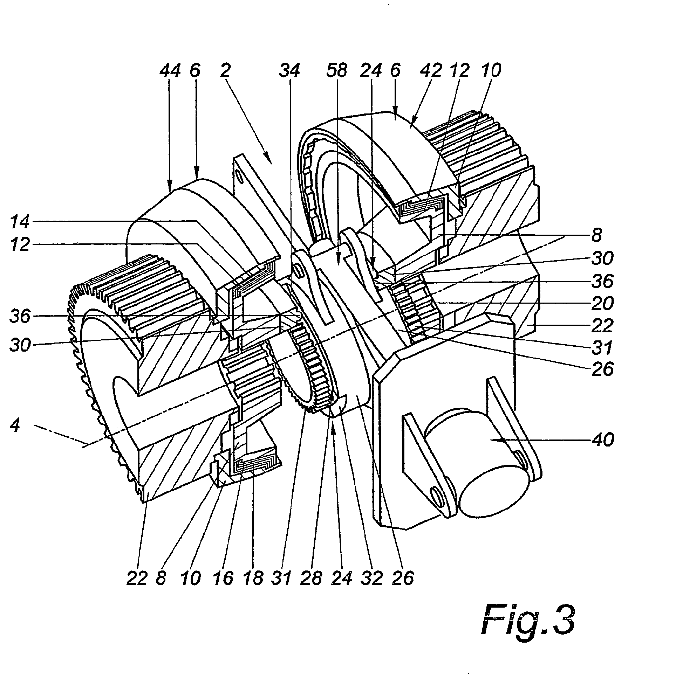

Fig. 3 shows a further embodiment in which the actuator 40 engages tangentially on the circumference of the ring gears 26 through a connecting rod 58. The connecting rod 58 can be actuated in an inductive, hydraulic or pneumatic way.

The Figs. 1 to 3 show embodiments in which the two clutch devices 42, 44 are actuated via a single actuator 40. As an alternative it is also possible that the ring gears 26 of each clutch unit 42, 44 are not rigidly connected and turned by a separate actuator 40 each. This embodiment is shown in Fig. 6. Using one actuator 40 per ring gear 26 very smooth engagement of the clutches devices 42, 44 can be realized.

The axial movement of the gear rings 26 allows building up the pressing pressure for the clutch 2 in a purely electromechanical way. The configuration as disk clutch and the arrangement as a conical clutch require substantially lower pressing pressures than in disk or flat disk clutches. The electrically triggered actuator 40 can be provided with a very compact arrangement.

By avoiding the necessity for a hydraulic actuation of the clutch 2, there is no additional need for hydraulic components such as hydraulic pumps, pressure-regulating valves, control valves, oil filters, oil lines and oil bores. Electric actuators can be supplied in a simple way with electric on-board power. This easily allows including the gear shifting in a motor-gear management system without having to provide an interface to a hydraulic system with all the elements required for this purpose.

In addition to this reduction of the required parts, the clutch 2 in accordance with the invention also provides an improvement in the service life of the clutch device 6, an increase in operational security, a reduction of the weight, a reduction of the cost of components and an improvement in the efficiency of the vehicle. Moreover, an optimization of the gear-shifting time is achieved.

The described clutch 2 can be used especially advantageously in the drive train between internal combustion engine and transmission of a vehicle.

## Claims

1. A clutch (2), especially for motor vehicles, for the torque connection of at least two drive parts which are rotatable about a rotational axis (4), comprising at least one clutch device (6) with a first clutch body (8) with at least one first clutch surface (12) and a second clutch body (10) with at least one second clutch surface (14), with said first and second clutch body (8, 10) being coaxially displaceable relative to each other by means of an actuating means (24) and said first and second clutch surface (12, 24) being mutually connectable in a non-positive way in at least one clutch engagement position, with the actuating means (24) comprising at least one ring gear (26) which comprises a ramp mechanism (28) and is twistable about the rotational axis (4) by an actuator (40), which mechanism in the clutch engagement position presses the first clutch body (8) against the second clutch body (10), **characterized in that** the clutch (2) is configured as a double cone clutch with two clutch units (42, 44), with each clutch unit (42, 44) comprising a clutch device (6) which can be actuated via an actuating means (24), and with a ring gear (26) with a ramp mechanism (28) being provided for said clutch devices (6), said ramp mechanisms (28) of the two clutch devices (42, 44) being arranged in a reciprocal way relative to each other, and that the actuator (40) is configured as a linear motor (46) and acts substantially in a tangential direction on the ring gear (26).

2. A clutch (2), especially for motor vehicles, for the torque connection of at least two drive parts which are rotatable about a rotational axis (4), comprising at least one clutch device (6) with a first clutch body (8) with at least one first clutch surface (12) and a second clutch body (10) with at least one second clutch surface (14), with said first and second clutch body (8, 10) being coaxially displaceable relative to each other by means of an actuating means (24) and said first and second clutch surface (12, 24) being mutually connectable in a non-positive way in at least one clutch engagement position, with the actuating means (24) comprising at least one ring gear (26) which comprises a ramp mechanism (28) and is twistable about the rotational axis (4) by an actuator (40), which mechanism in the clutch engagement position presses the first clutch body (8) against the second clutch body (10), **characterized in that** the clutch (2) is configured as a double cone clutch with two clutch units (42, 44), with each clutch unit (42, 44) comprising a clutch device (6) which can be actuated via an actuating means (24), and with a ring gear (26) with a ramp mechanism (28) being provided for said clutch devices (6), said ramp mechanisms (28) of the two clutch devices (42, 44) being arranged in a reciprocal way relative to each other, and that the actuator (40) acts in a substantially tangential way on the ring gear (26) via a worm gear (54).

3. A clutch (2), especially for motor vehicles, for the torque connection of at least two drive parts which are rotatable about a rotational axis (4), comprising at least one clutch device (6) with a first clutch body (8) with at least one first clutch surface (12) and a second clutch body (10) with at least one second clutch surface (14), with said first and second clutch body (8, 10) being coaxially displaceable relative to each other by means of an actuating means (24) and said first and second clutch surface (12, 24) being mutually connectable in a non-positive way in at least one clutch engagement position, with the actuating means (24) comprising at least one ring gear (26) which comprises a ramp mechanism (28) and is twistable about the rotational axis (4) by an actuator (40), which mechanism in the clutch engagement position presses the first clutch body (8) against the second clutch body (10), **characterized in that** the clutch (2) is configured as a double cone clutch with two clutch units (42, 44), with each clutch unit (42, 44) comprising a clutch device (6) which can be actuated via an actuating means (24), and with a ring gear (26) with a ramp mechanism (28) being provided for said clutch devices (6), said ramp mechanisms (28) of the two clutch devices (42, 44) being arranged in a reciprocal way relative to each other, and that the actuator (40) acts on the ring gear (26) in a substantially tangential way by means of a gearshift rod (58).

4. A clutch (2) according to one of the claims 1 to 3, **characterized in that** the ring gear (26) which can be turned by means of the actuator (40) comprises on at least one face side (32) at least one shifting ramp (34) which acts axially upon the first clutch body (8) via a torsionally rigid, but axially displaceably arranged engaging ring (30).

5. A clutch (2) according to claim 4, **characterized in that** the gear ring (26) acts through at least one shifting ramp (34) on at least one incline (37) of the engaging ring (30).

6. A clutch (2) according to claim 5, **characterized in that** the shifting ramp (34) of the ring gear (26) and the incline (37) of the engaging ring (30) are provided with an oppositely oriented configuration and can preferably have the same ascending slopes.

7. A clutch (2) according to one of the claims 4 to 6, **characterized in that** the shifting ramp (34) of the ring gear (26) and/or the incline (37) of the engaging ring (30) can each be arranged as at least one convolution, preferably as a trapezoid thread.

8. A clutch (2) according to one of the claims 1 to 7, **characterized in that** the ring gear (26) acts on the engaging ring (30) by means of roller bodies (38), preferably by means of balls.

9. A clutch (2) according to one of the claims 1 to 8, **characterized in that** the ring gear (26) can be fixed in at least one clutch engagement position by a locking mechanism (48).

10. A clutch (2) according to claim 6, **characterized in that** the locking mechanism (48) can be activated in an inductive, hydraulic or pneumatic way.

11. A clutch (2) according to one of the claims 1 to 7, **characterized in that** the actuator (40) can be driven in an electric, pneumatic or hydraulic way.

12. A clutch (2) according to one of the claims 3 or 4 to 11 when dependent on claim 3, **characterized in that** the gearshift rod (58) can be driven by means of an electromotor (56), preferably by means of a gear.

13. A clutch (2) according to one of the claims 1 to 12, **characterized in that** each clutch unit (42, 44) comprises a clutch device (6) which can be actuated via an actuating means (24), and with one ring gear (26) with a ramp mechanism (28) being provided for each clutch device (6).

14. A clutch (2) according to one of the claims 1 to 13, **characterized in that** the shifting ramps (34) of the ring gears (26) of the clutch units (42, 44) are shaped in a reciprocal way relative to each other.

15. A clutch (2) according to one of the claims 1 to 14, **characterized in that** the ring gears (26) are arranged to be rigidly connected with each other, preferably being of integral configuration.

16. A clutch (2) according to one of the claims 1 to 15, **characterized in that** the two clutch devices (6) of the two clutch units (42, 44) can be actuated through a single actuator (40).

17. A clutch (2) according to one of the claims 1 to 16, **characterized in that** the clutch (2) is arranged as a multi-cone clutch.

18. A clutch (2) according to one of the claims 1 to 17, **characterized in that** the clutch (2) is configured as a preferably wet-running disk clutch, especially preferably as a multiple-disk clutch.

19. A clutch (2) according to one of the claims 1 to 18, **characterized in that** each clutch device (6) of the two clutch units (42, 44) can be actuated through a separate actuator (40).

## Patentansprüche

1. Kupplung (2), insbesondere für Kraftfahrzeuge, für die Drehmomentverbindung wenigstens zweier Antriebsteile, die um eine Drehachse (4) drehbar sind, umfassend wenigstens eine Kupplungsvorrichtung (6) mit einem ersten Kupplungskörper (8) mit wenigstens einer ersten Kupplungsfläche (12) und einem zweiten Kupplungskörper (10) mit wenigstens einer zweiten Kupplungsfläche (14), wobei der erste und der zweite Kupplungskörper (8, 10) mit Hilfe eines Betätigungsmittels (24) koaxial im Verhältnis zueinander verschiebbar sind und die erste und die zweite Kupplungsfläche (12, 24) in wenigstens einer Kupplungseingriffposition kraftschlüssig miteinander verbindbar sind, wobei das Betätigungsmittel (24) wenigstens einen Klauenring (26) umfasst, der einen Rampenmechanismus (28) umfasst und durch ein Betätigungsorgan (40) um die Drehachse (4) drehbar ist, wobei dieser Mechanismus in der Kupplungseingriffposition den ersten Kupplungskörper (8) gegen den zweiten Kupplungskörper (10) drückt, **dadurch gekennzeichnet, dass** die Kupplung (2) als Doppelkegelkupplung mit zwei Kupplungseinheiten (42, 44) gestaltet ist, wobei jede Kupplungseinheit (42, 44) eine Kupplungsvorrichtung (6) umfasst, die über ein Betätigungsmittel (24) betätigt werden kann, und wobei ein Klauenring (26) mit einem Rampenmechanismus (28) für diese Kupplungsvorrichtungen (6) vorgesehen ist, wobei die Rampenmechanismen (28) der beiden Kupplungsvorrichtungen (42, 44) in einer zueinander reziproken Weise angeordnet sind, und dass das Betätigungsorgan (40) als Linearmotor (46) gestaltet ist und im wesentlichen in einer Tangentialrichtung auf den Klauenring (26) einwirkt.

2. Kupplung (2), insbesondere für Kraftfahrzeuge, für die Drehmomentverbindung wenigstens zweier Antriebsteile, die um eine Drehachse (4) drehbar sind, umfassend wenigstens eine Kupplungsvorrichtung (6) mit einem ersten Kupplungskörper (8) mit wenigstens einer ersten Kupplungsfläche (12) und einem zweiten Kupplungskörper (10) mit wenigstens einer zweiten Kupplungsfläche (14), wobei der erste und der zweite Kupplungskörper (8, 10) mit Hilfe eines Betätigungsmittels (24) koaxial im Verhältnis zueinander verschiebbar sind und die erste und die zweite Kupplungsfläche (12, 24) in wenigstens einer Kupplungseingriffposition kraftschlüssig miteinander verbindbar sind, wobei das Betätigungsmittel (24) wenigstens einen Klauenring (26) umfasst, der einen Rampenmechanismus (28) umfasst und durch ein Betätigungsorgan (40) um die Drehachse (4) drehbar ist, wobei dieser Mechanismus in der Kupplungseingriffposition den ersten Kupplungskörper (8) gegen den zweiten Kupplungskörper (10) drückt, **dadurch gekennzeichnet, dass** die Kupplung (2) als Doppelkegelkupplung mit zwei Kupplungseinheiten (42, 44) gestaltet ist, wobei jede Kupplungseinheit (42, 44) eine Kupplungsvorrichtung (6) umfasst, die über ein Betätigungsmittel (24) betätigt werden kann, und wobei ein Klauenring (26) mit einem Rampenmechanismus (28) für diese Kupplungsvorrichtungen (6) vorgesehen ist, wobei die Rampenmechanismen (28) der beiden Kupplungsvorrichtungen (42, 44) in einer zueinander reziproken Weise angeordnet sind, und dass das Betätigungsorgan (40) über ein Schneckengetriebe (54) in einer im wesentlichen tangentialen Weise auf den Klauenring (26) einwirkt.

3. Kupplung (2), insbesondere für Kraftfahrzeuge, für die Drehmomentverbindung wenigstens zweier Antriebsteile, die um eine Drehachse (4) drehbar sind, umfassend wenigstens eine Kupplungsvorrichtung (6) mit einem ersten Kupplungskörper (8) mit wenigstens einer ersten Kupplungsfläche (12) und einem zweiten Kupplungskörper (10) mit wenigstens einer zweiten Kupplungsfläche (14), wobei der erste und der zweite Kupplungskörper (8, 10) mit Hilfe eines Betätigungsmittels (24) koaxial im Verhältnis zueinander verschiebbar sind und die erste und die zweite Kupplungsfläche (12, 24) in wenigstens einer Kupplungseingriffposition kraftschlüssig miteinander verbindbar sind, wobei das Betätigungsmittel (24) wenigstens einen Klauenring (26) umfasst, der einen Rampenmechanismus (28) umfasst und durch ein Betätigungsorgan (40) um die Drehachse (4) drehbar ist, wobei dieser Mechanismus in der Kupplungseingriffposition den ersten Kupplungskörper (8) gegen den zweiten Kupplungskörper (10) drückt, **dadurch gekennzeichnet, dass** die Kupplung (2) als Doppelkegelkupplung mit zwei Kupplungseinheiten (42, 44) gestaltet ist, wobei jede Kupplungseinheit (42, 44) eine Kupplungsvorrichtung (6) umfasst, die über ein Betätigungsmittel (24) betätigt werden kann, und wobei ein Klauenring (26) mit einem Rampenmechanismus (28) für diese Kupplungsvorrichtungen (6) vorgesehen ist, wobei die Rampenmechanismen (28) der beiden Kupplungsvorrichtungen (42, 44) in einer zueinander reziproken Weise angeordnet sind, und dass das Betätigungsorgan (40) mittels einer Schaltstange (58) in einer im Wesentlichen tangentialen Weise auf den Klauenring (26) einwirkt.

4. Kupplung (2) nach einem der Ansprüche 1 bis 3, **dadurch gekennzeichnet, dass** der Klauenring (26), der mittels des Betätigungsorgans (40) gedreht werden kann, auf wenigstens einer Stirnseite (32) wenigstens eine Verstellrampe (34) umfasst, die über einen drehsteifen, jedoch axial verschiebbar angeordneten Einrückring (30) axial auf den ersten Kupplungskörper (8) einwirkt.

5. Kupplung (2) nach Anspruch 4, **dadurch gekennzeichnet, dass** das der Klauenring (26) durch wenigstens eine Verstellrampe (34) auf wenigstens eine schräge Ebene (37) des Einrückrings (30) einwirkt.

6. Kupplung (2) nach Anspruch 5, **dadurch gekennzeichnet, dass** die Verstellrampe (34) des Klauenrings (26) und die schräge Ebene (37) des Einrückrings (30) mit einer entgegengesetzt orientierten Konfiguration versehen sind und vorzugsweise die gleichen Steigungen aufweisen können.

7. Kupplung (2) nach einem der Ansprüche 4 bis 6, **dadurch gekennzeichnet, dass** die Verstellrampe (34) des Klauenrings (26) und/oder die schräge Ebene (37) des Einrückrings (30) jeweils als wenigstens ein Gewindegang, vorzugsweise als Trapezgewinde, gestaltet sein können.

8. Kupplung (2) nach einem der Ansprüche 1 bis 7, **dadurch gekennzeichnet, dass** der Klauenring (26) mittels Wälzkörpern (38), vorzugsweise mittels Kugeln, auf den Einrückring (30) einwirkt.

9. Kupplung (2) nach einem der Ansprüche 1 bis 8, **dadurch gekennzeichnet, dass** der Klauenring (26) in wenigstens einer Kupplungseingriffposition durch einen Sperrmechanismus (48) arretiert werden kann.

10. Kupplung (2) nach Anspruch 6, **dadurch gekennzeichnet, dass** der Sperrmechanismus (48) auf induktive, hydraulische oder pneumatische Weise betätigt werden kann.

11. Kupplung (2) nach einem der Ansprüche 1 bis 7, **dadurch gekennzeichnet, dass** das Betätigungsorgan (40) auf elektrische, pneumatische oder hydraulische Weise angetrieben werden kann.

12. Kupplung (2) nach einem der Ansprüche 3 oder 4 bis 11, wenn abhängig von Anspruch 3, **dadurch gekennzeichnet, dass** die Schaltstange (58) mittels eines Elektromotors (56), vorzugsweise mittels eines Getriebes, angetrieben werden kann.

13. Kupplung (2) nach einem der Ansprüche 1 bis 12, **dadurch gekennzeichnet, dass** jede Kupplungseinheit (42, 44) eine Kupplungsvorrichtung (6) umfasst, die über ein Betätigungsmittel (24) betätigt werden kann, und wobei für jede Kupplungsvorrichtung (6) ein Klauenring (26) mit einem Rampenmechanismus (28) vorgesehen ist.

14. Kupplung (2) nach einem der Ansprüche 1 bis 13, **dadurch gekennzeichnet, dass** die Verstellrampen (34) der Klauenringe (26) der Kupplungseinheiten (42, 44) in einer zueinander reziproken Weise gestaltet sind.

15. Kupplung (2) nach einem der Ansprüche 1 bis 14, **dadurch gekennzeichnet, dass** die Klauenringe (26) so gestaltet sind, dass sie miteinander starr verbunden sind, wobei sie vorzugsweise von integraler Konfiguration sind.

16. Kupplung (2) nach einem der Ansprüche 1 bis 15, **dadurch gekennzeichnet, dass** die beiden Kupplungsvorrichtungen (6) der beiden Kupplungseinheiten (42, 44) durch ein einziges Betätigungsorgan (40) betätigt werden können.

17. Kupplung (2) nach einem der Ansprüche 1 bis 16, **dadurch gekennzeichnet, dass** die Kupplung (2) als Mehrfachkegelkupplung gestaltet ist.

18. Kupplung (2) nach einem der Ansprüche 1 bis 17, **dadurch gekennzeichnet, dass** die Kupplung (2) als vorzugsweise nasslaufende Scheibenkupplung, besonders bevorzugt als Mehrscheibenkupplung, gestaltet ist.

19. Kupplung (2) nach einem der Ansprüche 1 bis 18, **dadurch gekennzeichnet, dass** jede Kupplungsvorrichtung (6) der beiden Kupplungseinheiten (42, 44) durch ein gesondertes Betätigungsorgan (40) betätigt werden kann.

## Revendications

1. Embrayage (2), spécialement pour des véhicules à moteur, pour la connexion de couple d'au moins deux parties d'entraînement qui sont rotatives autour d'un axe de rotation (4), comprenant au moins un dispositif d'embrayage (6) avec un premier corps d'embrayage (8) avec au moins une première surface d'embrayage (12) et un deuxième corps d'embrayage (10) avec au moins une deuxième surface d'embrayage (14), avec ledit premier et deuxième corps d'embrayage (8, 10) étant déplaçable de façon coaxiale l'un par rapport à l'autre par un moyen d'actionnement (24) et ladite première et deuxième surface d'embrayage (12, 24) étant mutuellement connectable d'une façon non positive dans au moins une position d'engagement d'embrayage, avec le moyen d'actionnement (24) comprenant au moins une couronne dentée (26) qui comprend un mécanisme de rampe (28) et qui peut être entouré autour de l'axe de rotation (4) au moyen d'un actionneur (40), lequel mécanisme dans la position d'engagement d'embrayage presse le premier corps d'embrayage (8) contre le deuxième corps d'embrayage (10), **caractérisé en ce que** l'embrayage (2) est configuré comme un embrayage à cône double avec deux unités d'embrayage (42, 44), avec chaque unité d'embrayage (42, 44) comprenant un dispositif d'embrayage (6) qui peut être actionné via un moyen d'actionnement (24), et avec une couronne dentée (26) avec un mécanisme de rampe (28) qui est fourni pour lesdits dispositifs d'embrayage (6), ledit mécanisme de rampe (28) des deux dispositifs d'embrayage (42, 44) étant disposés de façon réciproque l'un par rapport à l'autre, et **en ce que** l'actionneur (40) est configuré comme un moteur linéaire (46) et agit sensiblement dans une direction tangentielle sur la couronne dentée (26).

2. Embrayage (2), spécialement pour des véhicules à moteur, pour la connexion de couple d'au moins deux parties d'entraînement qui sont rotatives autour d'un axe de rotation (4), comprenant au moins un dispositif d'embrayage (6) avec un premier corps d'embrayage (8) avec au moins une première surface d'embrayage (12) et un deuxième corps d'embrayage (10) avec au moins une deuxième surface d'embrayage (14), avec ledit premier et deuxième corps d'embrayage (8, 10) étant déplaçables de façon coaxiale l'un par rapport à l'autre par un moyen d'actionnement (24) et ladite première et deuxième surface d'embrayage (12, 24) étant mutuellement connectable d'une façon non positive dans au moins une position d'engagement d'embrayage, avec le moyen d'actionnement (24) comprenant au moins une couronne dentée (26) qui comprend un mécanisme de rampe (28) et qui peut être entouré autour de l'axe de rotation (4) au moyen d'un actionneur (40), lequel mécanisme dans la position d'engagement d'embrayage presse le premier corps d'embrayage (8) contre le deuxième corps d'embrayage (10), **caractérisé en ce que** l'embrayage (2) est configuré comme un embrayage à cône double avec deux unités d'embrayage (42, 44), avec chaque unité d'embrayage (42, 44) comprenant un dispositif d'embrayage (6) qui peut être actionné via un moyen d'actionnement (24), et avec une couronne dentée (26) avec un mécanisme de rampe (28) qui est fourni pour lesdits dispositifs d'embrayage (6), ledit mécanisme de rampe (28) des deux dispositifs d'embrayage (42, 44) étant disposés de façon réciproque l'un par rapport à l'autre, et **en ce que** l'actionneur (40) agit sensiblement dans une direction tangentielle sur la couronne dentée (26) via une vis sans fin (54).

3. Embrayage (2), spécialement pour des véhicules à moteur, pour la connexion de couple d'au moins deux parties d'entraînement qui sont rotatives autour d'un axe de rotation (4), comprenant au moins un dispositif d'embrayage (6) avec un premier corps d'embrayage (8) avec au moins une première surface d'embrayage (12) et un deuxième corps d'embrayage (10) avec au moins une deuxième surface d'embrayage (14), avec ledit premier et deuxième corps d'embrayage (8, 10) étant déplaçables de façon coaxiale l'un par rapport à l'autre par un moyen d'actionnement (24) et ladite première et deuxième surface d'embrayage (12, 24) étant mutuellement connectable d'une façon non positive dans au moins une position d'engagement d'embrayage, avec le moyen d'actionnement (24) comprenant au moins une couronne dentée (26) qui comprend un mécanisme de rampe (28) et qui peut être entouré autour de l'axe de rotation (4) au moyen d'un actionneur (40), lequel mécanisme dans la position d'engagement d'embrayage presse le premier corps d'embrayage (8) contre le deuxième corps d'embrayage (10), **caractérisé en ce que** l'embrayage (2) est configuré comme un embrayage à cône double avec deux unités d'embrayage (42, 44), avec chaque unité d'embrayage (42, 44) comprenant un dispositif d'embrayage (6) qui peut être actionné via un moyen d'actionnement (24), et avec une couronne dentée (26) avec un mécanisme de rampe (28) qui est fourni pour lesdits dispositifs d'embrayage (6), ledit mécanisme de rampe (28) des deux dispositifs d'embrayage (42, 44) étant disposés de façon réciproque l'un par rapport à l'autre, et **en ce que** l'actionneur (40) agit sur la couronne dentée (26) d'une façon sensiblement tangentielle au moyen d'une tige de changement de vitesse (58).

4. Embrayage (2) selon l'une des revendications 1 à 3, **caractérisé en ce que** la couronne dentée (26) agit par l'intermédiaire d'au moins une rampes de passage des vitesses (34) sur au moins une inclinaison (37) de la couronne d'enclenchement (30).

5. Embrayage (2) selon la revendication 4, **caractérisé en ce que** la couronne dentée (26) agit par l'intermédiaire d'au moins une rampe de passage des vitesses (34) sur au moins une inclinaison (37) de la couronne d'enclenchement (30).

6. Embrayage (2) selon la revendication 5, **caractérisé en ce que** la rampe de passage des vitesses (34) de la couronne dentée (26) et l'inclinaison (37) de la couronne d'enclenchement (30) sont fournies avec une configuration orientée de façon opposée et peuvent de préférence avoir les mêmes pentes ascendantes.

7. Embrayage (2) selon l'une des revendications 4 à 6, **caractérisé en ce que** la rampe de passage des vitesses (34) de la couronne dentée (26) et/ou l'inclinaison (37) de la couronne d'enclenchement (30) peuvent chacune être disposées comme au moins une circonvolution, de préférence comme un filetage trapézoïdal.

8. Embrayage (2) selon l'une des revendications 1 à 7, **caractérisé en ce que** la couronne dentée (26) agit sur la couronne d'enclenchement (30) au moyen de corps à rouleaux (38), de préférence au moyen de billes.

9. Embrayage (2) selon l'une des revendications 1 à 8, **caractérisé en ce que** la couronne dentée (26) peut être fixée dans au moins une position d'enclenchement d'embrayage au moyen d'un mécanisme de verrouillage (48).

10. Embrayage (2) selon la revendication6, **caractérisé en ce que** le mécanisme de verrouillage (48) peut être activé d'une façon inductive, hydraulique ou pneumatique.

11. Embrayage (2) selon l'une des revendications 1 à 7, **caractérisé en ce que** l'actionneur (40) peut être électrique, pneumatique ou hydraulique.

12. Embrayage (2) selon l'une des revendications 3 ou 4 à 11nlorsque dépendant de la revendication 3, **caractérisé en ce que** la tige de changement de vitesse (58) peut être entraînée au moyen d'un moteur électrique (56), de préférence au moyen d'un engrenage.

13. Embrayage (2) selon l'une des revendications 1 à 12, **caractérisé en ce que** chaque unité d'embrayage (42, 44) comprend un dispositif d'embrayage (6) qui peut être actionné via un moyen d'actionnement (24), et avec une couronne dentée (26) avec un mécanisme de rampe (28) qui est fourni pour chaque dispositif d'embrayage (6).

14. Embrayage (2) selon l'une des revendications 1 à 13, **caractérisé en ce que** les rampes de passage des vitesses (34) des couronnes dentées (26) des unités d'embrayage (42, 44) sont formées dans d'une façon réciproque l'une par rapport à l'autre.

15. Embrayage (2) selon l'une des revendications 1 à 14, **caractérisé en ce que** les couronnes dentées (26) sont disposées pour être connectées de façon rigide les unes avec les autres, de préférence en étant de configuration intégrale.

16. Embrayage (2) selon l'une des revendications 1 à 15, **caractérisé en ce que** les deux dispositifs d'embrayage (6) des deux unités d'embrayage (42, 44) peuvent être actionnées au moyen d'un actionneur simple (40).

17. Embrayage (2) selon l'une des revendications 1 à 16, **caractérisé en ce que** l'embrayage (2) est disposé comme un embrayage à cônes multiples.

18. Embrayage (2) selon l'une des revendications 1 à 17, **caractérisé en ce que** l'embrayage (2) est configuré comme un embrayage à disque humide, de préférence spécialement comme un embrayage à disques multiples.

19. Embrayage (2) selon l'une des revendications 1 à 18, **caractérisé en ce que** chaque dispositif d'embrayage (6) des deux unités d'embrayage (42, 44) peut être actionné par l'intermédiaire d'un actionneur séparé (40).
